# EUROPÄISCHE PATENTSCHRIFT

(11) **EP 2 910 783 B1**
(45) Veröffentlichungstag und Bekanntmachung des Hinweises auf die Patenterteilung: **02.08.2017**
(21) Anmeldenummer: 15000218.6
(22) Anmeldetag: 26.01.2015
(51) Int. Cl.: F04C 2/08, F04C 2/16, F04C 13/00, B29C 47/36, A47J 43/07, B29C 47/00, B29C 47/08, B29C 47/40, B01F 7/00, B29C 47/60

(54) **Zweispindelige Schraubenspindelpumpe in einflutiger Bauweise**
Dual spindle helical spindle pump with a single-entry design
Pompe à vis à broche double dans une construction à simple flux

(30) Priorität: 24.02.2014 DE 102014002396
(43) Veröffentlichungstag der Anmeldung: 26.08.2015
(73) Patentinhaber: Jung & Co. Gerätebau GmbH, 25495 Kummerfeld/Pinneberg (DE)
(72) Erfinder: Christov, Weshen, 32457 Porta Westfalica (DE); Jung, Hans, 25421 Pinneberg (DE)
(74) Vertreter: Wetzel, Philipp

(56) Entgegenhaltungen:
- US-A- 2 994 562
- US-A- 3 057 665

## Beschreibung

Die Erfindung betrifft eine zweispindelige Schraubenspindelpumpe in einflutiger Bauweise mit einem Pumpengehäuse, das einen Pumpenabschnitt, einen Lagerabschnitt und einen Getriebeabschnitt mit einem Getrieberaum aufweist, wobei der Lagerabschnitt und der Pumpenabschnitt getrennt voneinander ausgeführt sind, mit einem Fördergehäuseteil als Bestandteil des Pumpenabschnitts, in dem zwei auf Wellen angeordnete Förderschrauben mit Flanken vorgesehen sind, wobei die Wellen im Lagerabschnitt gelagert sind (Außenlagerung) und sich in den Getriebeabschnitt erstrecken.

Ein solcher Pumpenaufbau ist bekannt aus der DE 10 2012 001 700 A1. Diese Pumpen zeichnen sich insbesondere durch einen produktschonenden Betrieb und eine damit einhergehende Verschleißarmut aus. Die offenbarten Schraubenspindelpumpen sind zwischen Pumpenabschnitt und Lagerabschnitt mit Gleitringdichtungen versehen. Dadurch wird insbesondere eine reversible Förderung möglich. Hierdurch liegt die Gleitringdichtung am Eintritt oder am Austritt der Pumpe. Die Förderschrauben befinden sich im Pumpengehäuse innerhalb des Pumpenabschnitts. Sie werden umschlossen vom Fördergehäuseteil und bilden zusammen Förderkammern. Die Förderschrauben sind auf den Wellen angebracht, die in einem Getriebeabschnitt enden. Auf den Wellen sind im Getriebeabschnitt Zahnräder angeordnet, mittels derer die Wellen drehgekoppelt sind.

Die Förderschrauben sind so angeordnet, dass sie sich im Eingriff befinden. Sie weisen jeweils eine korrespondierende Steigung und eine korrespondierende Breite der Schraubengänge auf. Zwischen den Schraubengängen befinden sich die Förderkammern. Während der Rotation der Wellen und damit der Förderschrauben wird das zu verpumpende Medium in diesen Förderkammern vom Eintritt zum Austritt verschoben.

Bei dieser Art von Pumpe besteht eine Schwierigkeit darin, hochviskose, nicht fließende Medien zu verpumpen. Das Medium erreicht die Förderkammern nicht und ein Pumpen des Mediums ist entsprechend nicht möglich. Als Lösung hierfür werden Extruder vor die Pumpe geschaltet, mit denen das hochviskose, nicht fließende Medium in die Pumpe hinein bewegt wird, so dass die Pumpe dann das Medium pumpen kann. Die vorgeschalteten Extruder weisen häufig das Problem auf, dass sie nicht ohne weiteres insbesondere für den Lebensmittelbereich verwendet werden können, da sie oft nicht hinreichend zu reinigen sind. Auch weisen sie hohe Investitionskosten auf.

Weiterhin ist die Pumpe verbesserungswürdig, da durch die Gleitringdichtungen Toträume entstehen, in denen Material verbleibt, so dass eine Reinigung erschwert möglich ist. Dieses Problem besteht insbesondere bei hochviskosen, nicht fließenden Medien.

US 3 057 665 A zeigt ebenfalls eine Schraubenspindelpumpe wie zuvor beschrieben mit Förderschrauben, allerdings in zweiseitiger Lagerung. Deren Förderschrauben sind unterteilt in zwei Abschnitte, dem Pumpschraubenabschnitt und dem Transportschraubenabschnitt. Die Transportschraubenabschnitte sind in einer Zuführkammer vorgesehen, über der ein Hopper angeordnet ist. Mit den Transportschraubenabschnitten wird das aus dem Hopper abgegebene Material zu den Pumpschraubenabschnitten gefördert.

Aufgabe der Erfindung ist es, die vorgenannte Pumpe dahingehend zu verbessern, dass hochviskose, nicht fließende Medien gefördert werden können.

Gelöst wird die Aufgabe dadurch, dass das Pumpengehäuse einen Extruderabschnitt aufweist, der mit dem Pumpenabschnitt verbunden ist, dass ein Extrudergehäuseteil vorgesehen ist, durch den sich die Wellen erstrecken, dass auf den Wellen Extruderschrauben mit Flanken vorgesehen sind, und dass die Extruderschrauben eine Steigung aufweisen, die identisch mit einer Steigung der Förderschrauben ist.

Durch das Vorsehen eines Extruderabschnitts, der in die Pumpe integriert ist, wird es auf einfache Weise möglich, hochviskose, nicht fließende Medien zu pumpen. Gleichzeitig entfallen externe und teure sowie schwer zu reinigende Extruder.

Eine weitere Lehre der Erfindung sieht vor, dass der Extruderabschnitt zwischen Pumpenabschnitt und Lagerabschnitt vorgesehen ist. Hierdurch wird das Medium vom Lagerabschnitt weg bewegt. Die Lagerdichtung ist daher nicht druckbelastet und kann entsprechend einfacher ausgelegt werden.

Eine weitere Lehre der Erfindung sieht vor, dass die Breite eines Schraubengangs der Extruderschraube kleiner als die Breite der Förderschraube ist. Hierdurch wird es auf einfache Weise möglich, größere Förderkammern unter Beibehaltung einer im Wesentlichen konstanten Steigung beizubehalten.

Eine weitere Lehre der Erfindung sieht vor, dass zwischen Pumpenabschnitt und Lagerabschnitt oder Extruderabschnitt und Lagerabschnitt eine hydraulische Trennung besteht, bevorzug über eine Lippendichtung. Es hat sich gezeigt, dass durch das Vorsehen einer Lippendichtung zum einen die Dichtigkeitserfordernisse eingehalten werden können und gleichzeitig der Totraum im Dichtungsbereich erheblich reduziert werden kann.

Eine weitere Lehre der Erfindung sieht vor, dass im Bereich des Extruderabschnitts ein Beschickungstrichter vorgesehen ist. Durch den Beschickungstrichter kann das hochviskose, nicht fließende Medium auf einfache Weise in die Förderräume der Extruderschraube eingebracht werden. Dieses ist insbesondere bei Medien hilfreich, die eine Tendenz aufweisen, an Wandungen haften zu bleiben. Alternativ kann ein Flansch als Anschlag an den Extrudereinlass vorgesehen sein.

Eine weitere Lehre der Erfindung sieht vor, dass zwischen zwei Schraubengängen der Förderschraube und/oder der Extruderschraube eine Förderkammer mit einer Breite vorgesehen ist, deren Breite im Wesentlichen mit der Axiallänge der Steigung abzüglich der Breite des Schraubengangs übereinstimmt. Hierdurch wird es möglich, die Steigung der Förderschrauben/Extruderschrauben konstant zu halten und gleichzeitig hinreichende Förderräume bereitzustellen.

Nachfolgend wird die Erfindung anhand eines Ausführungsbeispiels in Verbindung mit einer Zeichnung näher erläutert. Dabei zeigen:
- Fig. 1: eine Seitenansicht einer erfindungsgemäßen Pumpe,
- Fig. 2: eine Draufsicht zu Fig. 1,

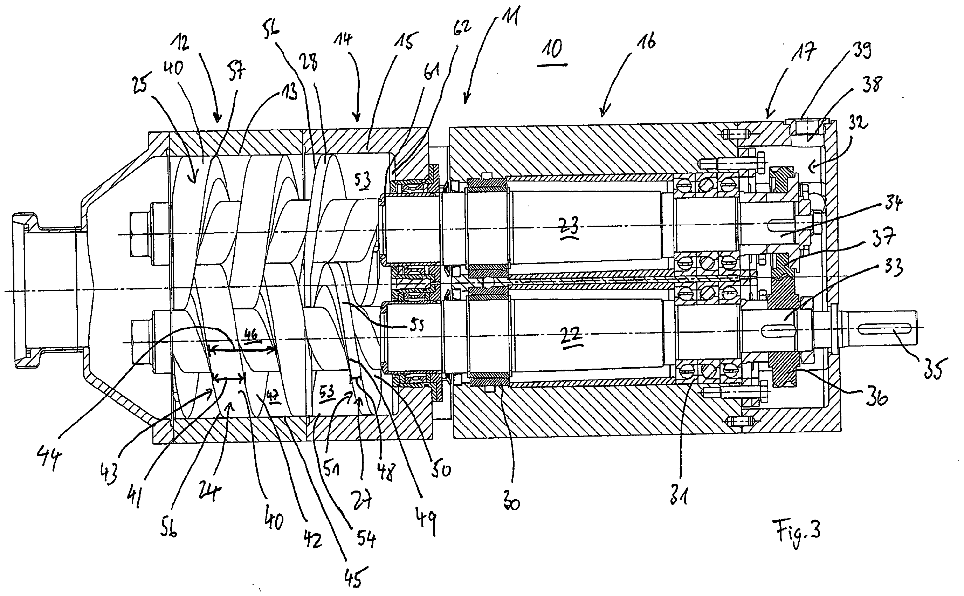

- Fig. 3: eine Schnittansicht zu Fig. 2, und
- Fig. 4: eine Detailansicht der erfindungsgemäßen Förderschrauben.

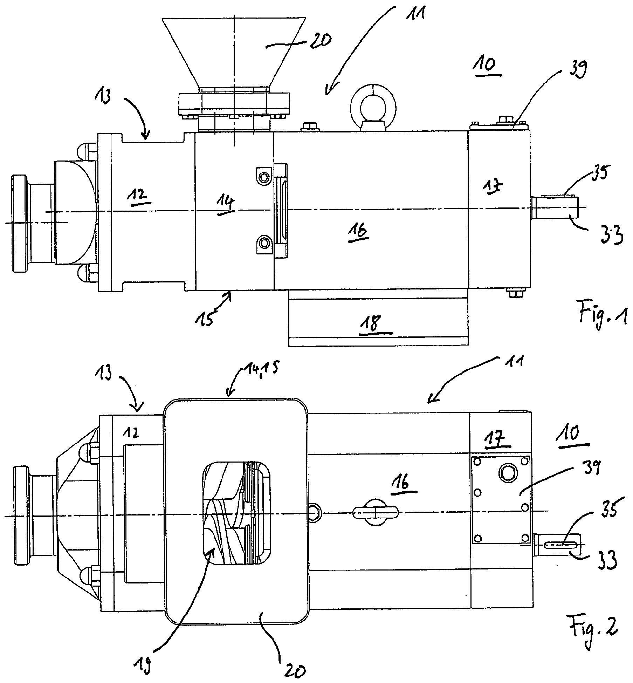

Fig. 1 zeigt eine Seitenansicht einer erfindungsgemäßen Spindelpumpe 10. Fig. 2 zeigt eine Draufsicht zu Fig. 1. Die Spindelpumpe 10 weist ein Gehäuse 11 auf, das einen Pumpenabschnitt 12 mit einem Fördergehäuseteil 13, einem Extruderabschnitt 14 mit einem Extrudergehäuseteil 15, einem Lagerabschnitt 16 und einem Getriebeabschnitt 17 aufweist. Die Abschnitte sind räumlich voneinander getrennt, wobei auch eine hydraulische Trennung zwischen dem Pumpenabschnitt 12 in Verbindung mit dem Extruderabschnitt 14 und dem Lagerabschnitt 16, beziehungsweise dem Getriebeabschnitt 17, vorgesehen ist. Am Gehäuse 10 ist eine Grundplatte 18 vorgesehen. Der Extruderabschnitt 14 weist eine Öffnung 19 auf, über der ein Beschickungstrichter 20 über einen Flansch angebracht ist.

Die Spindelpumpe 10 umfasst eine angetriebene Welle 22 und eine getriebene Welle 23. An der angetriebenen Welle 22 ist eine Förderschraube 24 und an der getriebenen Welle 23 ist eine Förderschraube 25 angeordnet, die sich im Eingriff befinden. Die Förderschrauben 24, 25 befinden sich in einer korrespondierenden Bohrung im Fördergehäuseteil 13.

An der angetriebenen Welle 22 ist eine Extruderschraube 27 und an der getriebenen Welle 23 ist eine Extruderschraube 28 angeordnet, die sich ebenfalls im Eingriff befinden. Die Extruderschrauben 27, 28 sind im Extrudergehäuseteil 15 in einer korrespondierenden Bohrung vorgesehen. An der Oberseite ist die Bohrung mit der Öffnung 19 geöffnet, so dass das zu fördernde Medium in den Extrudergehäuseteil eintreten kann.

Im Lagerabschnitt 16 sind die Wellen 22, 23 mit Nadellagern 30 und Rollenlagern 31 gelagert. Der Getriebeabschnitt 17 weist einen Getrieberaum 32 auf, in den sich die Wellenenden 33, 34 der Wellen 22, 23 erstrecken. Das Wellenende 33 der angetriebenen Welle 22 erstreckt sich aus dem Gehäuse 11 heraus und weist dort einen Anschluss 35 für eine Antriebseinheit (nicht dargestellt) auf. Auf der angetriebenen Welle 22 befindet sich ein Zahnrad 36. Auf der getriebenen Welle 23 ist ein Zahnrad 37 angeordnet. Die Zähne der Zahnräder 36, 37 befinden sich kämmend im Eingriff.

Der Getrieberaum 32 weist eine Öffnung 38 auf, die mit einem Deckel 39 verschlossen ist. Durch die Öffnung 38 hindurch lässt sich das Flankenspiel der Förderschrauben 24, 25 und/oder der Extruderschrauben 27, 28 einstellen.

Die Förderschrauben 24, 25 weisen jeweils einen Schraubengang 40 auf. Der Schraubengang 40 weist eine Breite 41 auf, die der Materialstärke beziehungsweise Wandstärke des Schraubengangs entspricht. Des Weiteren weist der Schraubengang jeweils eine Flanke 42, 43 auf. Des Weiteren weist der Schraubengang 40 eine Steigerung 44 auf, mit der der Abstand zweier benachbarter Flanken 42 oder benachbarter Flanken 43 gemeint ist. Eine Innenwand 45 der Bohrung des Fördergehäuseteils 13 in Verbindung mit den beiden Flanken 42, 43 und einer Seitenfläche 46 des dazwischen befindlichen Schraubengangs 40 der anderen an dieser Stelle im Eingriff befindlichen Welle bilden eine Förderkammer 47.

Auch die Extruderschrauben 27, 28 weisen jeweils einen Schraubengang 48 mit einer Breite 49 auf. Die Schraubengänge 48 weisen jeweils Flanken 50, 51 auf. Des Weiteren weist der Schraubengang 48 eine Steigung 52 analog der Steigung 44 auf. Im dargestellten Ausführungsbeispiel ist die Steigung 52 identisch mit der Steigung 44. Auch hinsichtlich der Extruderschrauben 27, 28 sind Förderkammern 53 vorgesehen, die durch die Innenwand 54 der Bohrung des Extrudergehäuseteils 15, den Flanken 50, 51 und der Seitenfläche eines Schraubengangs 55 gebildet ist.

Die Förderschrauben 24, 25 und die Extruderschrauben 27, 28 sind so ausgeführt, dass das zu fördernde Medium beim Übergang vom Extrudergehäuseteil 15 auf das Fördergehäuseteil 13 direkt von den Extruderschrauben 27, 28 auf die Förderschrauben 24, 25 übergeben wird. Dieses ist zum einen möglich, weil die Steigung 52 der Extruderschrauben 27, 28 gleich groß wie die Steigung 44 der Förderschrauben 24, 25 ist. Weiterhin ist die Mantellinie 56 der Flanke 43 in der Steigung des Schraubengangs 40 beim Übergang auf die jeweilige Extruderschraube 27, 28 kontinuierlich fortlaufend. Die Mantellinie 57 der Flanke 50 ändert sich im Übergangsbereich vom Fördergehäuseteil 13 auf das Extrudergehäuseteil 15 dergestalt, dass ein Axialversatz beim Übergang vom Schraubengang 40 auf den Schraubengang 48 so durchgeführt wird, dass die Breite 49 der Extruderschraube 27, 28 entsprechend reduziert wird. Nach der Reduktion verläuft auch die Steigung der Mantellinie 57 wieder gleich, mit der Steigung 52. Hierdurch wird auf einfache Weise eine Übergabe des zu fördernden Mediums von der größeren Förderkammer 53 auf die kleinere Förderkammer 47 ermöglicht.

Die größere Förderkammer 53 wiederum ermöglicht den Materialeintritt des hochviskosen, nicht fließenden Mediums in die Förderkammer zwischen die Flanken 50 und 51 eines jeweiligen Schraubengangs 48, so dass dann ein Eintritt des Mediums in die Spindelpumpe 10 unter Durchführung des Pumpvorgangs als solches möglich ist. Durch die Reduktion der Breite 49 der Schraubengänge 48 entsteht ein Verbindungsraum 58 zwischen den Förderkammern 53, so dass eine Druckerhöhung im Extruderabschnitt 14 vermieden wird, um einen Eintritt des Mediums in die Extruderschrauben 27, 28 zu ermöglichen.

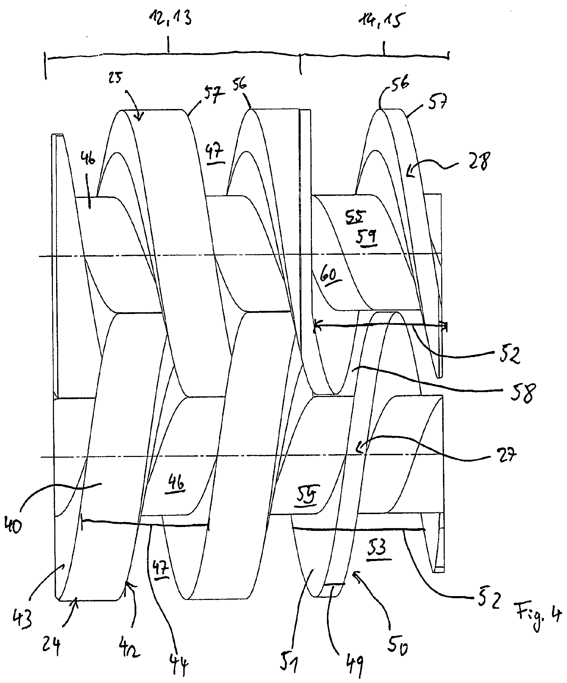

Aus Fig. 4 wird ersichtlich, dass die Steigung 52 weiterhin identisch mit der Steigung 44 der Förderschrauben 24, 25 ist. Die Seitenfläche 55 der Extruderschrauben 27, 28 setzt sich zusammen aus einem ersten Seitenwandabschnitt 59 und einem zweiten Seitenabschnitt 60. Der Seitenwandabschnitt 60 in Verbindung mit der Breite 49 entspricht der Breite 41 des Schraubengangs 40 der Förderschrauben 24, 25. Der erste Seitenwandabschnitt 59 ist identisch mit der Seitenfläche 46 der Förderschrauben 24, 25.

Der Lagerabschnitt 16 ist gegenüber dem Extruderabschnitt 14 mittels einer Lippendichtung 61 abgedichtet. Hierdurch wird ein vorhandener Totraum 62 so minimiert, dass es möglich ist, das Medium, das in diesen Raum gelangt, mit der Extruderschraube 27, 28 aus dem Totraum 62 zu entfernen. Der Einsatz der Lippendichtung 61 ermöglicht darüber hinaus ein mögliches Trockenlaufen der Pumpe 10 sowie den Einsatz der Pumpe 10 im Zusammenhang insbesondere mit klebrigen Medien, wie Kaugummimasse oder dergleichen.

**Bezugszeichenliste:**

| | | | |
|---|---|---|---|
| 10 | Spindelpumpe | 42 | Flanke |
| 11 | Gehäuse | 43 | Flanke |
| 12 | Pumpenabschnitt | 44 | Steigung |
| 13 | Fördergehäuseteil | 45 | Innenwand |
| 14 | Extruderabschnitt | 46 | Seitenfläche |
| 15 | Extrudergehäuseteil | 47 | Förderkammer |
| 16 | Lagerabschnitt | 48 | Schraubengang |
| 17 | Getriebeabschnitt | 49 | Breite |
| 18 | Grundplatte | 50 | Flanke |
| 19 | Öffnung | 51 | Flanke |
| 20 | Beschickungstrichter | 52 | Steigung |
| 22 | angetriebene Welle | 53 | Förderkammer |
| 23 | getriebene Welle | 54 | Innenwand |
| 24 | Förderschraube | 55 | Seitenfläche |
| 25 | Förderschraube | 56 | Mantellinie |
| 27 | Extruderschraube | 57 | Mantellinie |
| 28 | Extruderschraube | 58 | Verbindungsraum |
| 30 | Nadellager | 59 | erster Seitenwandabschnitt |
| 31 | Rollenlager | 60 | zweiter Seitenwandabschnitt |
| 32 | Getrieberaum | 61 | Lippendichtung |
| 33 | Wellenende | 62 | Totraum |
| 34 | Wellenende | | |
| 35 | Anschluss | | |
| 36 | Zahnrad | | |
| 37 | Zahnrad | | |
| 38 | Öffnung | | |
| 39 | Deckel | | |
| 40 | Schraubengang | | |
| 41 | Breite | | |

## Patentansprüche

1. Zweispindelige Schraubenspindelpumpe in einflutiger Bauweise mit einem Pumpengehäuse (10), das einen Pumpenabschnitt (12), einen Lagerabschnitt (16) und einen Getriebeabschnitt (17) mit einem Getrieberaum (32) aufweist, wobei der Lagerabschnitt (16) und der Pumpenabschnitt (12) getrennt voneinander ausgeführt sind, mit einem Fördergehäuseteil (13) als Bestandteil des Pumpenabschnitts (12), in dem zwei auf Wellen (22, 23) angeordnete Förderschrauben (24, 25) mit Flanken (42, 43) vorgesehen sind, wobei die Wellen (22, 23) im Lagerabschnitt (16) gelagert sind und sich in den Getriebeabschnitt (17) erstrecken, wobei das Pumpengehäuse (11) einen Extruderabschnitt (14) aufweist, der mit dem Pumpenabschnitt (12) verbunden ist, dass ein Extrudergehäuseteil (15) vorgesehen ist, durch den sich die Wellen (22, 23) erstrecken, und dass auf den Wellen (22, 23) Extruderschrauben (27, 28) mit Flanken (50, 51) vorgesehen sind **dadurch gekennzeichnet, dass** die Extruderschrauben (27, 28) eine Steigung (52) aufweisen, die identisch mit einer Steigung (44) der Förderschrauben (24, 25) ist.

2. Spindelpumpe nach Anspruch 1, **dadurch gekennzeichnet, dass** der Extruderabschnitt (14) zwischen Pumpenabschnitt (12) und Lagerabschnitt (16) vorgesehen ist.

3. Spindelpumpe nach Anspruch 1 oder 2, **dadurch gekennzeichnet, dass** die Breite (49) eines Schraubengangs (48) der Extruderschraube (27, 28) kleiner als die Breite (41) der Förderschraube (24, 25) ist.

4. Spindelpumpe nach einem der Ansprüche 1 bis 3, **dadurch gekennzeichnet, dass** zwischen Pumpenabschnitt (12) und Lagerabschnitt (16) oder Extruderabschnitt (14) und Lagerabschnitt (16) eine hydraulische Trennung besteht, bevorzugt über eine Lippendichtung (61).

5. Spindelpumpe nach einem der Ansprüche 1 bis 4, **dadurch gekennzeichnet, dass** im Bereich des Extruderabschnitts (14) ein Beschickungstrichter (20) vorgesehen ist.

6. Spindelpumpe nach einem der Ansprüche 1 bis 5, **dadurch gekennzeichnet, dass** zwischen zwei Schraubengängen (40, 48) der Förderschraube (24, 25) und/oder der Extruderschraube (27, 28) eine Förderkammer (47, 53) mit einer Breite vorgesehen ist, deren Breite im Wesentlichen mit der Axiallänge der Steigung (44, 52) abzüglich der Breite (41, 49) des Schraubengangs übereinstimmt.

## Claims

1. Double-screw screw-spindle pump of single flow design having a pump housing (10) which has a pump section (12), a bearing section (16) and a gear mechanism section (17) with a gear mechanism space (32), the bearing section (16) and the pump section (12) being configured separately from one another, having a conveyor housing part (13) as a constituent part of the pump section (12), in which two conveying screws (24, 25) which have flanks (42, 43) and are arranged on shafts (22, 23) are provided, the shafts (22, 23) being mounted in the bearing section (16) and extending into the gear mechanism section (17), the pump housing (11) having an extruder section (14) which is connected to the pump section (12), in that an extruder housing part (15) is provided, through which the shafts (22, 23) extend, and in that extruder screws (27, 28) with flanks (50, 51) are provided on the shafts (22, 23), **characterized in that** the extruder screws (27, 28) have a pitch (52) which is identical to a pitch (44) of the conveying screws (24, 25).

2. Spindle pump according to Claim 1, **characterized in that** the extruder section (14) is provided between the pump section (12) and the bearing section (16).

3. Spindle pump according to Claim 1 or 2, **characterized in that** the width (49) of a screw thread (48) of the extruder screw (27, 28) is smaller than the width (41) of the conveying screw (24, 25).

4. Spindle pump according to one of Claims 1 to 3, **characterized in that** there is a hydraulic separation between the pump section (12) and the bearing section (16) or the extruder section (14) and the bearing section (16), preferably via a lip seal (61).

5. Spindle pump according to one of Claims 1 to 4, **characterized in that** a feeding hopper (20) is provided in the region of the extruder section (14).

6. Spindle pump according to one of Claims 1 to 5, **characterized in that** a conveyor chamber (47, 53) with a width is provided between two screw threads (40, 48) of the conveying screw (24, 25) and/or the extruder screw (27, 28), the width of which corresponds substantially to the axial length of the pitch (44, 52) minus the width (41, 49) of the screw thread.

## Revendications

1. Pompe à vis à broche double dans une construction à simple flux, comprenant un boîtier de pompe (10) qui présente une portion de pompe (12), une portion de palier (16) et une portion de transmission (17) avec un espace de transmission (32), la portion de palier (16) et la portion de pompe (12) étant réalisées de manière séparée l'une de l'autre, avec une partie de boîtier de transport (13) faisant partie de la portion de pompe (12), dans laquelle sont prévues deux vis de transport (24, 25) disposées sur des arbres (22, 23), avec des flancs (42, 43), les arbres (22, 23) étant supportés dans la portion de palier (16) et s'étendant dans la portion de transmission (17), le boîtier de pompe (11) présentant une portion d'extrudeuse (14) qui est raccordée à la portion de pompe (12), en ce qu'une partie de boîtier d'extrudeuse (15) est prévue, à travers laquelle s'étendent les arbres (22, 23), et en ce que des vis d'extrudeuse (27, 28) avec des flancs (50, 51) sont prévues sur les arbres (22, 23), **caractérisée en ce que** les vis d'extrudeuse (27, 28) présentent un pas (52) qui est identique à un pas (44) des vis de transport (24, 25).

2. Pompe à broche selon la revendication 1, **caractérisée en ce que** la portion d'extrudeuse (14) est prévue entre la portion de pompe (12) et la portion de palier (16).

3. Pompe à broche selon la revendication 1 ou 2, **caractérisée en ce que** la largeur (49) d'un pas de vis (48) de la vis d'extrudeuse (27, 28) est inférieure à la largeur (41) de la vis de transport (24, 25).

4. Pompe à broche selon l'une quelconque des revendications 1 à 3, **caractérisée en ce qu'**entre la portion de pompe (12) et la portion de palier (16) ou la portion d'extrudeuse (14) et la portion de palier (16) existe une séparation hydraulique, de préférence par le biais d'un joint d'étanchéité à lèvre (61).

5. Pompe à broche selon l'une quelconque des revendications 1 à 4, **caractérisée en ce qu'**une trémie de remplissage (20) est prévue dans la région de la portion d'extrudeuse (14).

6. Pompe à broche selon l'une quelconque des revendications 1 à 5, **caractérisée en ce qu'**entre deux pas de vis (40, 48) de la vis de transport (24, 25) et/ou de la vis d'extrudeuse (27, 28) est prévue une chambre de transport (47, 53) ayant une largeur qui coïncide essentiellement avec la longueur axiale du pas (44, 52), moins la largeur (41, 49) du pas de vis.
